# EUROPEAN PATENT APPLICATION

(11) **EP 1 591 457 A1**
(43) Date of publication of application: **02.11.2005**
(21) Application number: 04101869.8
(22) Date of filing: 30.04.2004
(51) Int. Cl.: C08F 6/00, C08F 255/02

(54) **Polyolefin treatment for separating volatile material**

(71) Applicant: SOLVAY (Société Anonyme), 1050 Bruxelles (BE)
(72) Inventor: PERNA, Stefano, 56040, PISA (IT); COPPI, Angelo, 26100, CREMONA (IT); GIACOBBI, Emmanuele, 43100, PARMA (IT)
(74) Representative: Vande Gucht, Anne

(57) **Abstract**

Process for the separation of volatile material from particulate polyolefin comprising
(a) feeding the particulate polyolefin to a purge vessel, optionally causing it to move through the vessel in substantially plug-flow mode,
(b) heating the particulate polyolefin in the purge vessel to a temperature greater than 30°C but insufficiently high to cause the particles to become agglomerated, and/or maintaining the polyolefin at a temperature in this range in the purge vessel,
(c) feeding air to the purge vessel counter-current to the movement of the particulate polyolefin to remove volatile material therefrom,
(d) transferring the particulate polyolefin from the purge vessel to a cooling vessel wherein the particulate polyolefin moves through a cooling zone where it cools to the desired temperature and
(e) removing the particulate polyolefin from the cooling vessel, wherein the particulate polyolefin is a functionalized polyolefin.

## Description

The present invention relates to a process for the removal of volatile materials from particulate polyolefins.

Whilst the present invention can in principle be applied to any particulate polyolefin for the removal of volatiles therefrom, the following description refers primarily to the application of the process to the removal of volatiles from polyolefins in pelletized form.

The volatile materials (hereinafter called VM for the sake of brevity) referred to throughout this specification can be, for example :
- the residual monomer or monomers remaining associated with the polyolefin after an initial unreacted monomer separation and recovery procedure has been carried out on the polyolefm removed from the polymerisation reactor;
- oligomers;
- any solvent or diluent used in the polymerization;
- the catalyst materials or products derived therefrom;
- additives in the polymerisation (e.g. molecular weight regulators);
- impurities present in any of the materials used in the polymerisation, or materials employed for lubricating moving parts of the reactors;
- by-products generated during the polymerisation of the polyolefin or during the extrusion process;
- moisture.

Such VM can also arise from degradation or inter-reaction of the polymerisation components themselves and/or their products. The presence of such VM in the fmal polyolefin is generally undesirable and can result, for example, in unwanted odour in articles manufactured therefrom, or can produce taint in foodstuffs packed in containers fabricated from the polyolefm, or in water from potable water piping systems. The presence of inflammable VM can also present a fire or explosion hazard. Likewise, such VM can have toxic, irritant or other undesirable pharmacological properties which normally render their removal desirable or even essential.

The production of VM in the polyolefin can also occur during pelletisation thereof, for example, by thermal degradation of the polyolefm itself, or by the degradation of additives employed in the pelletising process.

A process for the removal of VM from particulate polymer has already been described in document W0 02/088194. According to this process, the particulate polymer is fed to a purge vessel and heated in the purge vessel to a temperature greater than 30°C but insufficiently high to cause the particles to become agglomerated, and/or maintained at a temperature in this range in the purge vessel, gas is fed to the purge vessel to remove VM therefrom and the particulate polymer is removed from the purge vessel.

According to a further embodiment of the process disclosed in document W0 02/088194, the particulate polymer is transferred from the purge vessel to a cooling vessel wherein it moves through a cooling zone where it cools to the desired temperature and is fmally removed from the cooling vessel.

For functionalized polyolefins, VM can include, in addition to the above mentioned volatile materials, byproducts generated during the functionalization of the polyolefin.

Functionalization of polyolefins, i.e. the incorporation of functional groups into polyolefins, is well known in the art as a useful method for modifying their chemical, physical and/or mechanical properties, such as, for instance, adhesion, dyeability, paintability, permeability and compatibility (see e.g. T.C. Chung, "Functionalization of Polyolefms", Academic Press 2002). Examples of functionalized polyolefins are maleic anhydride grafted polymers of propylene, maleic anhydride modified polymers of ethylene and vinyl silane grafted polymers of ethylene.

The document W0 02/088194 does not describe nor suggest a process for removing VM produced during the manufacture of functionalized polyolefins, more particularly in the case said polyolefins are vinyl silane grafted polymers of ethylene.

The present invention provides a process for the removal of VM from functionalized polyolefins.

Accordingly, the present invention provides a process for the separation of volatile material from particulate polyolefin comprising
(a) feeding the particulate polyolefin to a purge vessel, optionally causing it to move through the vessel in substantially plug-flow mode,
(b) heating the particulate polyolefin in the purge vessel to a temperature greater than 30°C but insufficiently high to cause the particles to become agglomerated, and/or maintaining the polyolefin at a temperature in this range in the purge vessel,
(c) feeding air to the purge vessel counter-current to the movement of the particulate polyolefin to remove volatile material therefrom,
(d) transferring the particulate polyolefin from the purge vessel to a cooling vessel wherein the particulate polyolefm moves through a cooling zone where it cools to the desired temperature and
(e) removing the particulate polyolefin from the cooling vessel, wherein the particulate polyolefin is a functionalized polyolefm.

By "plug flow mode" is meant throughout this specification that the flow of particulate functionalized polyolefin through the relevant vessel occurs in such a manner that there is little or no axial mixing as the particulate functionalized polyolefin travels through the vessel, thus ensuring that the residence time of the particles is substantially uniform. "Plug flow" is sometimes referred to in the art as "mass flow", especially where the flow under consideration is movement of solid particulate materials.

Where the functionalized polyolefin moves through the purge vessel in substantially plug-flow mode, the flow characteristics of the particulate functionalized polyolefin in the purge vessel are such that the standard deviation of the residence time is preferably not greater than 50 %, more preferably not greater than 20%, and even more preferably not greater than 10 % of the mean residence time of the particulate functionalized polyolefm in the purge vessel.

According to the present invention, the process for the separation of VM is generally carried out on particulate functionalized polyolefin, for example, functionalized polyolefin powder, pelletised functionalized polyolefin or granular material, which has been substantially freed from monomer in an earlier separation step.

In the case that the polyolefin has been prepared in the presence of a transition metal-containing catalyst, preferably any catalyst residues present in the polyolefin have been deactivated prior to treating the polymer in accordance with the process of the present invention. Preferably the polyolefin has been prepared by polymerisation or (co)polymerisation of one or more monomeric 1-olefins, in the gas phase, the liquid phase (e.g. using so-called "particle form" polymerisation conditions), or the solution phase, or from the high temperature high pressure process (often referred to as the "high pressure process"). The polyolefin can be converted into any particulate form, e.g. by granulation or pelletising. The functionalization of the polyolefin can be carried out before, during or after the conversion to any particulate form. The functionalization of the polyolefin is preferably carried out during the conversion to particulate. Preferably the particulate functionalized polyolefin is a pelleted functionalized polyolefin.

An essential feature of the process of the present invention is that the separation of VM is carried out on a polyolefin which has been functionalized. Functionalized polyolefins have been defined above. Among functionalized polyolefins which are especially suitable for being submitted to the process of the present invention are maleic anhydride grafted polymers of propylene, maleic anhydride modified polymers of ethylene and vinyl silane grafted polymers of ethylene, and among these, vinyl silane grafted polymers of ethylene are particularly preferred.

Vinyl silane grafted polymers of ethylene are intermediate products in the manufacture of well-known silane crosslinked polyethylene (see for instance documents GB-A-1234034 and GB-A-1286460). This crosslinked polymer is produced from polyethylene in a two step process. In a first reaction step of this process a silane is grafted on the polymer chains. For this reaction, polyethylene is treated with a free radical source, usually a peroxide, such as a diaralkyl or a dialkyl peroxide, e.g. dicumyl peroxide or 2,5-dimethylhexane-2,5-di-tert.-butyl peroxide. The peroxide decomposes thermally, and radicals are formed which abstract hydrogen atoms from the polyethylene chains. The activated polyethylene chains then react with the vinyl groups of vinyl silanes, whereby vinyl trimethoxy silane is presently most widely used in industry. The silane molecules are thus chemically bonded to the polyethylene chain to form the silane crosslinkable polyethylene.

In the second reaction step, an article (e.g. a pipe) which has been shaped from the silane crosslinkable polyethylene and which usually contains a suitable catalyst, is subjected to heat in an aqueous media, preferably in hot water or steam, whereby Si-O-Si bonds are formed and curing (or crosslinking) occurs. Before being cured, the silane crosslinkable polyethylene, which is usually obtained in the form of granules, has to be stored under exclusion of water before being further processed, in order to avoid any premature curing caused by e.g. the atmospheric humidity. This is the reason why these granules have to be stored for instance in aluminium bags in the absence of any humidity.

The quantity of VM (excluding water) present in the functionalized polyolefin fed to the purge vessel is preferably not greater than 500 ppm (parts per million by weight), more preferably not greater than 60 ppm, and even more preferably not greater than 30 ppm.

The particulate functionalized polyolefin fed to the purge vessel can be preheated before entering the purge vessel, using a preheating vessel located upstream of the purge vessel or it can be heated solely in the purge vessel itself. It is preferred to heat the particulate functionalized polyolefin in the purge vessel itself in order to avoid any possible unwanted side reaction or degradation of the functional groups beared by the functionalized polyolefin.

In the case that the particulate functionalized polyolefin is pelletised, the pellet can, if desired, be fed directly from the pelletising machine to the purge vessel, or to the heating vessel if one is employed. Feeding pellet to the purge vessel or to the heating vessel direct from the pelletising machine can make further savings in energy requirements, especially if the pellet discharge from said machine still contains residual heat from the pelletising process. This saving in energy can be optimised, for example, by suitable adjustment of the temperature of the quench water such that the pellet remains relatively hot after the quench, but not so hot that agglomeration of the pellets can occur.

The purge vessel can be operated under batch or continuous conditions. It is preferred to operate the purge vessel under continuous conditions.

The particulate functionalized polyolefin is fed to the purge vessel in any convenient manner, for example, using pneumatic conveying or by means of gravity feed devices employing suitable feeder valve means between the source and the purge vessel. It is preferred to feed the particulate functionalized polyolefin continuously to the purge vessel.

Where the particulate functionalized polyolefin flows through the purge vessel in a substantially plug-flow manner, the residence time of the particles in the vessel is substantially the same for all the particles. Plug flow can be achieved using conventional industrial equipment. Thus it is preferred to employ a purge vessel with smooth internal walls and having uniform cross section throughout a major portion of its length. A frusto-conical or other tapering cross section, for example, at the exit of the purge vessel, can be tolerated provided this does not impair the plug flow qualities of the vessel. The principles of plug flow are well known in the art and suitable apparatus can be readily designed adopting these principles. The purge vessel is preferably tubular and of substantially uniform cross section. The major portion may take the form, for example, of a tube having square or circular cross section. The purge vessel is most preferably a vertically disposed cylindrical vessel having a conical section at the base which tapers towards an outlet for the functionalized polyolefm located at the bottom of the vessel. Preferably the purge vessel is vertically disposed. Most preferably the purge vessel is of uniform cylindrical cross section throughout a major part of its length.

Where the particulate functionalized polyolefin flows through the purge vessel in a substantially plug-flow manner, the rate of flow and the dimensions of the purge vessel are suitably arranged so that the residence time of the particulate functionalized polyolefin in the purge vessel lies in the range from about 0.5 to 16 hours, preferably 2 to 16 hours, more preferably 6 to 10 hours.

The rate of flow of the particulate functionalized polyolefin fed to the purge vessel is preferably between 600 and 1 000 kg/hour.

The dimensions of the purge vessel are suitably arranged to contain a mass of the particulate functionalized polyolefin being preferably between 6 000 and 9 000 kg.

The temperature to which the particulate functionalized polyolefin is heated in the purge vessel is suitably at least 30°C, preferably at least 50°C, most preferably at least 70°C or higher, provided that the temperature is insufficiently high to cause the particles to become agglomerated. As mentioned above, as a rough guide, the temperature is preferably not greater than about 5°C below the Vicat softening temperature. For example, if the Vicat softening temperature is 80°C, the maximum temperature to which the particulate functionalized polyolefin is heated should preferably not be greater than 75°C. In the case that the particulate functionalized polyolefin is a functionalized high density polyethylene having a density of at least 0.945 kg/m³, the temperature of the heating in the purge vessel is preferably in the range 70 to 100°C, more preferably in the range 70 to 90 °C. On the other hand, in the case that the particulate polymer is a functionalized lower density polyethylene, e.g. having a density in the range 0.915 to 0.945 kg/m³, the said temperature preferably lies in the range 60 to 80°C. In any event the temperature must be insufficiently high to cause the particles to become agglomerated. Failure to observe this can result in the functionalized polyolefin becoming blocked in the preheating or purge vessels, or even forming an intractable mass within these vessels.

Where the particulate functionalized polyolefin flows through the purge vessel in a substantially plug-flow manner, it is moved through the purge vessel using any suitable means of motivation, for example using an Archimedean screw device or merely under the influence of gravity. Preferably however the particulate polymer moves under the influence of gravity in response to the continuous removal of solid from the base of the purge vessel. Preferably the purge vessel is insulated to retain heat during purging.

Air coming from the outside environment is passed through the purge vessel counter current to the flow of the particulate polymer therein. This air is preferably filtered and dried by any known means. If desired, the air can be heated to maintain the temperature of the particulate functionalized polyolefin within the desired temperature range prior to injection into the purge vessel. If desired the air can be supplemented with another gas or gases, for example, nitrogen or carbon dioxide, e.g. if it is desired to reduce any potential risk of fire or explosion. However, the present invention is generally applied to the reduction of VM in particulate functionalized polyolefin in which the content of volatiles is already at a relatively low level. Accordingly, the level of VM present in the purge gas stream exiting from the purge vessel is normally not more than about 5 milligrams per litre of gas, preferably not more than about 1 milligram per litre of gas.

The rate of flow of air (or air diluted with any other gas) through the particulate functionalized polyolefin is maintained at a level below that which would cause disruption of the plug flow of the particulate functionalized polyolefin. This is well below the rate of flow which would cause fluidisation of the particulate functionalized polyolefin. In the case of pelleted functionalized polyolefin, the rate of flow of gas that can be tolerated before the onset of disruption of the plug flow is generally substantially higher than for powdery functionalized polyolefin. Preferably, the rate of flow of air is preferably at least 0.5 litres per hour per square centimetre of cross section measured radially across the direction of flow of particulate functionalized polyolefm through the purge vessel (units hereinafter abbreviated to 1.hr⁻¹cm⁻²). Thus for example, rates of flow of air from 2 to 10 1.hr⁻¹cm⁻² through the purge vessel are particularly useful. Substantially higher rates e.g. of 10 to 50 1.hr⁻¹cm⁻² can be employed if desired provided that the substantial plug-flow mode of the particulate functionalized polyolefin does not become disrupted thereby.

The pressure in the purge vessel can be any desired pressure, but in practice the use of a pressure close to atmospheric pressure (e.g. slightly above 1 bar absolute) is generally satisfactory as this avoids the need to use expensive pressure vessels. In practice the introduction of the purge gas into the purge vessel will generally cause a slight increase of pressure therein.

VM diffuse from the particulate functionalized polyolefin in the purge vessel into the air stream and are carried counter current to the movement of the particulate functionalized polyolefin towards the region where the particulate functionalized polyolefin is fed to the vessel. The air is preferably vented from the purge vessel using suitable piping means. The vented air containing the VM can be fed to a flare stack or, if it is desired to recover any volatile components, for example, it may be fed to a suitable recovery unit. Frequently it is found that the concentration of volatiles is so small that the air from the purge vessel can be vented directly to the atmosphere. Preferably the process conditions are maintained such that the concentration of any inflammable VM in the air vented from the purge vessel provide less than 25%, preferably less than 5% of the flammability limit of the gas. The concentration of such VM can be reduced, for example, by reducing one or more of the following: (1) the standing volume of particulate functionalized polyolefin in the purge vessel; (2) the rate of flow of the particulate functionalized polyolefin through the purge vessel and (3) the temperature of the particulate functionalized polyolefm in the purge vessel; or by increasing the rate of flow of the gas through the purge vessel.

The particulate functionalized polyolefin is suitably removed from the purge vessel using conventional industrial conveying means for particulate materials. The particulate functionalized polyolefm is preferably removed from the purge vessel using withdrawal means to continuously withdraw said functionalized polyolefin therefrom, for example motorised valves or motorised screws. Preferred mechanical withdrawal means include variable rate withdrawal means, for example using variable speed motorised valves or motorised screws. The vessel can be equipped with means to detect either the residence time or the weight of particulate functionalized polyolefin therein, as variables used to control their withdrawal. The vessel is preferably equipped with means to detect the quantity or level of particulate functionalized polyolefin therein, for example a means to detect the level of settled particulate functionalized polyolefin in the vessel. Preferably the means to detect the quantity or level of particulate functionalized polyolefin within the vessel is coupled with the variable rate withdrawal means, for example, to maintain a constant volume of particulate functionalized polyolefin within the vessel. The coupling may be achieved, for example, by electronic means or mechanical means.

After the particulate functionalized polyolefm has passed through the purge vessel it is still hot and requires cooling before being transferred to storage or undergoing further treatment or processing. For example, in the case of functionalized polymers of ethylene, if it is desired to transfer the particulate functionalized polyolefin to storage using dilute or dense phase pneumatic conveying means, it is generally cooled to a temperature below about 65°C before transfer to reduce the possibility of functional groups beared by the functionalized polyolefin to be engaged in unwanted side reaction or degradation thereof in the pneumatic conveying lines.

Thus, the particulate functionalized polyolefin is transferred from the purge vessel to a cooling vessel wherein it moves through a cooling zone. The means used to cool the particulate functionalized polyolefm comprises, for example, conventional industrial particulate cooling equipment, operating under batch or continuous conditions.

According to the present invention, the cooling of the particulate functionalized polyolefin in the cooling zone is preferably performed by using dried air. To this end, air coming from the outside environment is generally filtered, if necessary cooled down to the desired temperature, which is generally comprised between 0 and 30 °C, preferably between 15 and 25 °C, and de-hydrated to its dewpoint temperature, generally comprised between - 10 and -100 °C, preferably between - 50 and - 80 °C . In this way, the particulate functionalized polyolefin is cooled down in a moisture free environment.

The particulate functionalized polyolefin generally flows through the cooling vessel in the same motion as in the purge vessel, i.e. in a substantially plug-flow manner. Plug flow can be achieved using conventional industrial equipment.

Where the particulate functionalized polyolefin flows through the cooling vessel in a substantially plug-flow manner, the rate of flow and the dimensions of the vessel are suitably arranged so that the residence time of the particulate functionalized polyolefin in the cooling vessel lies in the range from about 0.25 to 20 hours, preferably 0.5 to 16 hours, more preferably 1 to 12 hours. The most preferred residence time varies from 1 to 3 h.

When the cooling vessel is operated under batch mode, the treatment of the particulate functionalized polyolefin in the cooling vessel is carried out for 0.25 to 20 hours, preferably for 0.5 to 16 hours, more preferably for 1 to 12 hours. The most preferred treatment time in the cooling vessel varies from 1 to 3 h.

For example, the cooling vessel can be a dried air fluidised bed cooler.

Particulate functionalized polyolefms suitably employed in the present invention can be, for example, powders which are the direct products of the functionalization of the corresponding polyolefin, as defined above. It is preferred that these functionalized polyolefms are pellets which are well known in the art as a standard product employed for the fabrication of polymeric articles. These pellets may be prepared by any conventional face-cutting pelleting machine. The size of the functionalized polyolefin particles is suitably in the range 0.1 to 10 mm, preferably in the range 2 to 7 mm. For example, functionalized polyolefin pellets employed in the fabrication of plastics articles generally lie in the range 3 to 6 mm.

Any known additives, like antioxidants, processing-aids, fillers, pigments, etc. can be incorporated into the particulate functionalized polyolefms, the latter being either in the form of powder or in the form of pellets. This incorporation can be carried out according to any known method, including for instance the known compounding of functionalized polyolefins pellets with a masterbatch containing the additives.

The functionalized polyolefin particles may comprise one or more polyolefins. Preferred polyolefins, i.e. those which are most easily functionalized, are polyethylene, polypropylene and copolymers of ethylene with one or more C₃ to C₁₂ alpha olefins. The particulate functionalized polyolefins most suitable for being submitted to the process of the invention are vinyl silane grafted polymers of ethylene.

After the particulate functionalized polyolefin is removed from the cooling vessel, generally using the same means of withdrawal as those disclosed for removing them from the purge vessel, it is generally conveyed to a storage unit or a packaging unit. In the case the functionalized polyolefin particles are vinyl silane grafted polymers of ethylene, they are stored for instance in aluminium bags in the absence of any humidity.

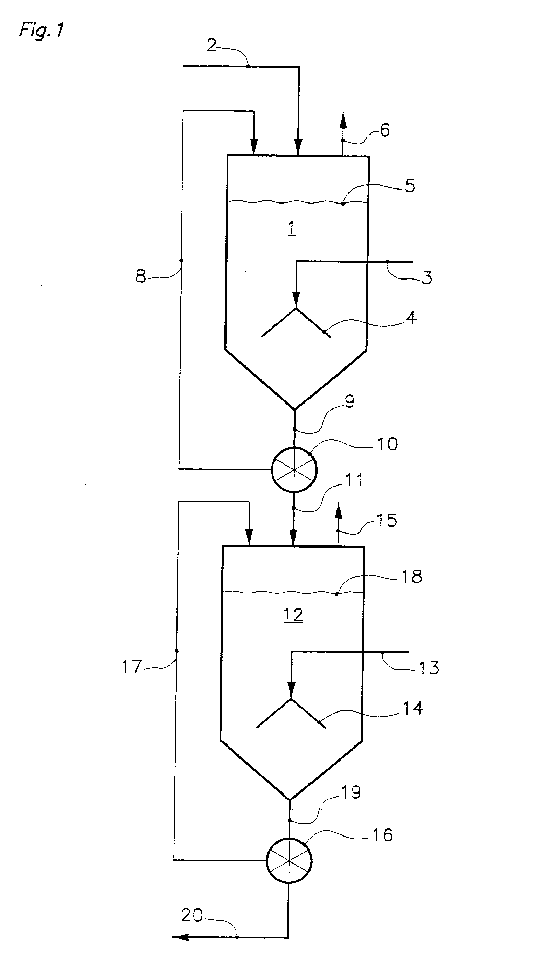

The present invention will now be illustrated with reference to the accompanying drawing wherein Figure 1 diagrammatically represents an apparatus for reducing the VM of functionalized polyolefin pellets prepared as described above. The purge vessel and the cooling vessel are operated in the continuous mode.

Figure 1 shows a purge vessel 1 which is fed with said pellets at a rate of 600 to 900 kg/hour by an inlet pipe 2 via a pneumatic system (not shown). The pellets form a moving bed of 6 000 to 9 000 kg inside vessel 1. Air filtered and heated by means of electrical resistances (not shown) till 70 to 90 °C is pumped into vessel 1 through pipe 3 which conveys the air to the diffuser 4 at the bottom of vessel 1. The motorized valve 10 for discharging the pellets from vessel 1 is coupled to a servomechanism (not shown) and detection means 8 which detect the level 5 of pellets in vessel 1 so that the residence time of the pellets therein is set at 6 to 10 hours. The smooth interior walls of vessel 1 and the uniform cylindrical cross section facilitates plug flow of the pellets as they travel downwardly under the influence of gravity.

The VM present in the bed of pellets diffuses in the air which passes upwardly through the bed of pellets in vessel 1 and exits from said vessel through pipe 6.

The pellets are discharged continuously from vessel 1 through pipe 9, motorized valve 10 and pipe 11, in the cooling vessel 12. Air filtered, cooled at 20 to 35 °C and de-hydrated to a dewpoint of - 60 to - 80 °C is pumped into vessel 12 through pipe 13 which conveys the air to the diffuser 14 at the bottom of vessel 12. The air passes upwardly through the bed of pellets in vessel 12 and exits from said vessel through pipe 15.The motorized valve 16 for discharging the pellets from vessel 12 is coupled to a servomechanism (not shown) and detection means 17 which detect the level 18 of pellets in vessel 12 so that the residence time of the pellets therein is set at 1 to 3 hours.

The pellets, finally discharged continuously from vessel 12 through pipe 19 and motorized valve 16, are conveyed, via pipe 20 to a packaging unit (not shown) where they are stored in aluminium bags.

The present invention will now be illustrated by the following example.

### Example

The apparatus diagrammatically represented in Figure 1 is used. The purge vessel 1 and the cooling vessel 12 are operated under batch conditions. Vinylsilane grafted polyethylene pellets are fed to the purge vessel 1 at a rate of 1 000 kg/hour by an inlet pipe 2 via a pneumatic system (not shown). The pellets form a fixed bed of 8 000 kg inside vessel 1. Air filtered and heated by means of electrical resistances (not shown) till 90 °C is pumped into vessel 1 through pipe 3 which conveys the air to the diffuser 4 at the bottom of vessel 1. Air treatment is carried out for 10 hours.

The VM present in the bed of pellets diffuses in the air which passes upwardly through the bed of pellets in vessel 1 and exits from said vessel through pipe 6.

After 10 hours of treatment, the pellets are discharged by batch from vessel 1 through pipe 9, motorized valve 10 and pipe 11, in the cooling vessel 12. Air filtered, cooled at 20 °C and de-hydrated to a dewpoint of - 60 °C is pumped into vessel 12 through pipe 13 which conveys the air to the diffuser 14 at the bottom of vessel 12. The air passes upwardly through the bed of pellets in vessel 12 and exits from said vessel through pipe 15. The treatment with cold dried air is carried out for 3 hours.

After 3 hours of treatment, the pellets, finally discharged from vessel 12 through pipe 19 and motorized valve 16, are conveyed, via pipe 20 to a packaging unit (not shown) where they are stored in aluminium bags.

## Claims

1. Process for the separation of volatile material from particulate polyolefin comprising
(a) feeding the particulate polyolefin to a purge vessel, optionally causing it to move through the vessel in substantially plug-flow mode,
(b) heating the particulate polyolefin in the purge vessel to a temperature greater than 30°C but insufficiently high to cause the particles to become agglomerated, and/or maintaining the polyolefin at a temperature in this range in the purge vessel,
(c) feeding air to the purge vessel counter-current to the movement of the particulate polyolefin to remove volatile material therefrom,
(d) transferring the particulate polyolefin from the purge vessel to a cooling vessel wherein the particulate polyolefin moves through a cooling zone where it cools to the desired temperature and
(e) removing the particulate polyolefin from the cooling vessel,
wherein the particulate polyolefin is a functionalized polyolefm.

2. Process according to claim 1, wherein the functionalized polyolefin is a vinyl silane grafted polymer of ethylene.

3. Process according to claims 1 or 2, wherein the functionalized polyolefin is in the form of pellets.

4. Process according to any of claims 1 to 3 wherein the cooling of the particulate polyolefin in the cooling zone of the cooling vessel (d) is performed by using dried air.

5. Process according to claim 4, wherein the dried air is cooled down between 0 and 30 °C.

6. Process according to claims 4 or 5, wherein the dried air is dehydrated to its dewpoint temperature.

7. Process according to any of claims 1 to 6, wherein the process is carried out in a continuous mode and the residence time of the particulate functionalized polyolefm in the cooling vessel lies in the range from 0.5 to 16 hours.

8. Process according to any of claims 1 to 6, wherein the process is carried out in a batch mode and the treatment of the particulate functionalized polyolefin in the cooling vessel is carried out for 0.5 to 16 hours.
